# EUROPEAN PATENT SPECIFICATION

(11) **EP 3 068 094 B1**
(45) Date of publication and mention of the grant of the patent: **06.11.2019**
(21) Application number: 15196623.1
(22) Date of filing: 26.11.2015
(51) Int. Cl.: H04L 29/06

(54) **SYSTEM AND METHOD FOR IMPROVED LAWFUL INTERCEPTION OF ENCRYPTED MESSAGE**
SYSTEM UND VERFAHREN FÜR VERBESSERTES LEGALES ABFANGEN VON VERSCHLÜSSELTEN NACHRICHTEN
SYSTÈME ET PROCÉDÉ AMÉLIORÉS POUR UNE INTERCEPTION LÉGALE DE MESSAGE CHIFFRÉ

(30) Priority: 11.03.2015 IN 1206CH2015; 22.06.2015 US 201514746336
(43) Date of publication of application: 14.09.2016
(73) Proprietor: Wipro Limited, 560 035 Karnataka (IN)
(72) Inventor: JAYARAMAN, Venkata Subramanian, 600051 Tamil Nadu (IN); SEETHARAMAN, Swaminathan, 600 044 Tamil Nadu (IN)
(74) Representative: Finnegan Europe LLP

(56) References cited:
- WO-A1-2013/117243
- US-A1- 2009 182 668
- US-A1- 2013 182 840
- US-A1- 2014 380 056

## Description

### Technical Field

This disclosure relates generally to lawful interception of communication networks, and more particularly to a system and method for improved lawful interception of encrypted message.

### Background

Traditionally, a message may be transferred in encrypted form between a sender device and a receiver device through a communication network. A message encryption key may be used to encrypt/decrypt the message. The message encryption key may also be transferred in encrypted form through the communication network. A private key, associated with the receiver device, may be used to encrypt/decrypt the message encryption key. A private key of the receiver device may not be transferred at all.

Typically, there may not be any intermediate component in the communication network between the sender device and the receiver device with the ability to deduce either the message encryption key or the private key. Typically, a copy of only the message in encrypted form may be sent to the lawful interception device (LID). The LID may not have the ability to obtain either the private key of the message receiver device or the message encryption key. The LID may be unable to decrypt the message communicated between the message sender and receiver.

US 2013/0182840 relates to lawful interception of communications that are encrypted using the Multimedia Internet KEYing Ticket (MIKEY-TICKET) key exchange protocol. This protocol involves a key management service (KMS), which generates a key for an initiator user equipment (UE) to use for secure communication with a responder UE. The KMS generates the key based upon a random number (RANDRi). Lawful interception is enabled by assigning each UE a unique secret key, which is stored in a secure database accessible only by the KMS. The Secure Realtime Transport Protocol (SRTP) headers of packets sent between the UEs contain a master key identifier (MKI). A law enforcement agency (LEA) extracts the MKI from the header of an SRTP packet, and communicates the MKI to the KMS. The KMS uses the MKI to determine the secret key of the UE, which is in turn used to regenerate the random number. The session key used for communication between the UEs can then be regenerated.

### SUMMARY

In accordance with the invention, there is provided: a method for a lawful interception of one or more encrypted messages in a communication network as recited by claim 1; a lawful interception device as recited by claim 8; and a non-transitory computer readable medium as recited by claim 9.

In one embodiment, a lawful interception device for improved lawful interception of an encrypted message is disclosed, the lawful interception device comprising a memory, a processor coupled to the memory storing processor executable instructions which when executed by the processor causes the processor to perform operations comprising receiving a copy of the one or more encrypted messages; receiving one or more message encryption key generation parameters associated with the one or more encrypted messages from the communication network; receiving one or more composite decryption logics from an encryption device, to decrypt the one or more encrypted messages; decrypting the one or more encrypted messages based on the one or more message encryption key generation parameters and the one or more composite decryption logics for a lawful interception.

In another embodiment, there is provided a method for a lawful interception of one or more encrypted messages in a communication network, the method comprising receiving a copy of the one or more encrypted messages; receiving one or more message encryption key generation parameters associated with the one or more encrypted messages from the communication network; receiving one or more composite decryption logics from an encryption device, to decrypt the one or more encrypted messages; decrypting the one or more encrypted messages based on the one or more message encryption key generation parameters and the one or more composite decryption logics for the lawful interception.

There is further provided a method for a lawful Interception of one or more encrypted messages in a communication network, the method comprising: receiving, by a lawful interception device, a copy of the one or more encrypted messages; receiving, by the lawful interception device, one or more message encryption key generation parameters associated with the one or more encrypted messages from the communication network; receiving, by the lawful interception device, one or more composite decryption logics, from an encryption device, to decrypt the one or more encrypted messages; decrypting, by the lawful interception device, the one or more encrypted messages based on the one or more message encryption key generation parameters and the one or more composite decryption logics for the lawful interception.

There is further provided a lawful interception device comprising: a memory; a processor coupled to the memory storing processor executable instructions which when executed by the processor causes the processor to perform operations comprising: receiving, by the lawful interception device, a copy of the one or more encrypted messages; receiving, by the lawful interception device, one or more message encryption key generation parameters associated with the one or more encrypted messages from the communication network; receiving, by the lawful interception device, one or more composite decryption logics, from an encryption device, to decrypt the one or more encrypted messages; decrypting, by the lawful interception device, the one or more encrypted messages based on the one or more message encryption key generation parameters and the one or more composite decryption logics for a lawful interception.

The operations of receiving the one or more composite decryption logics may further comprise identifying the encryption device to receive the one or more composite decryption logics based on at least one of a physical distance between the communication network and the encryption device, an overload indication, a network congestion data, and a route availability data.

The operations may further comprise receiving one or more notifications indicating transmission of the one or more encrypted messages.

Each of the one or more encrypted messages may comprise an encrypted text message and an encrypted message encryption key.

The one or more composite decryption logics may be determined, by the encryption device, based on one or more service information and the one or more message encryption key generation parameters associated with the one or more encrypted messages received from the communication network.

The one or more message encryption key generation parameters may comprise at least one of a random seed value, an International Mobile Subscriber Identity (IMSI), and one or more time stamp of executing the encryption algorithm.

There is still further provided a non-transitory computer readable medium including instructions stored thereon that when processed by at least one processor cause a lawful interception device to perform operations comprising: receiving a copy of the one or more encrypted messages; receiving one or more message encryption key generation parameters associated with the one or more encrypted messages from the communication network; receiving one or more composite decryption logics, from an encryption device, to decrypt the one or more encrypted messages; decrypting the one or more encrypted messages based on the one or more message encryption key generation parameters and the one or more composite decryption logics for lawful interception.

The operations of receiving the one or more composite decryption logics may further comprise identifying the encryption device to receive the one or more composite decryption logics based on at least one of a physical distance between the communication network and the encryption device, an overload indication, a network congestion data, and a route availability data.

The operations may further comprise receiving one or more notifications indicating transmission of the one or more encrypted messages.

Each of the one or more encrypted messages may comprise an encrypted text message and an encrypted message encryption key.

The one or more composite decryption logics may be determined, by the encryption device, based on one or more service information and the one or more message encryption key generation parameters associated with the one or more encrypted messages received from the communication network.

The one or more message encryption key generation parameters may comprise at least one of a random seed value, an International Mobile Subscriber Identity (IMSI), and one or more time stamp of executing the encryption algorithm.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** illustrates an exemplary diagram for an environment 100 for a lawful interception device for a lawful interception of encrypted messages in accordance with various embodiments of the present disclosure.
**FIG. 2** is a functional block diagram the memory of a lawful interception device for a lawful interception of encrypted messages according to some embodiments of the present disclosure.
**FIG. 3** illustrates an exemplary flow diagram of a method of a lawful interception of one or more encrypted messages in a communication network, according to some embodiments of the present disclosure.
**FIG. 4** is a block diagram of an exemplary computer system for implementing embodiments consistent with the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

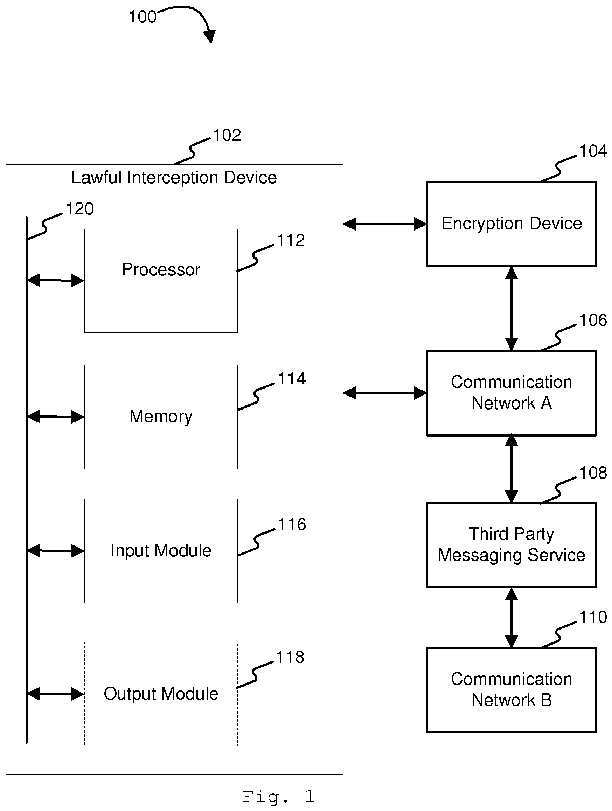

**FIG. 1** illustrates an exemplary diagram for an environment 100 for a lawful interception device for a lawful interception of encrypted messages in accordance with various embodiments of the present disclosure. The exemplary environment 100 may include a lawful interception device 102, an encryption device 104, a communication network A 106, a third party messaging service 108, and a communication network B 110. The lawful interception device 102 may further include a processor 112, a memory 114, an input module 116, and an output module 118. While not shown, the exemplary environment 100 may include additional components, such as a database etc. which are well known to those of ordinary skill in the art and thus will not be described in detail here. The third party messaging service 108 may be a cross-platform, secure text messaging system for end-to-end encrypted communication via text messages or data messages. The third party messaging service 108 may be used to try to keep communication safe and "off the radar" from outside threats of eavesdropping and industrial espionage. An encryption device 104 may contain a database of encryption algorithm used for encryption of one or more services offered by the third party messaging service 108. The encryption device 104 may be a geographically redundant system to ensure availability even in case of component or network failures and in other catastrophic situations, as well as to minimize the delays in responding when the lawful interception device 102 requests any information.

The lawful interception device 102 may assist in lawful interception of encrypted messages and is described with examples herein, although the lawful interception device 102 may perform other types and numbers of functions. The lawful interception device 102, may include at least one input device 116, CPU/processor 112, memory 114, and Output Module 118, which may be coupled together by bus 120, although the lawful interception device 102 may comprise other types and numbers of elements in other configurations.

Processor(s) 112 may execute one or more computer-executable instructions stored in the memory 114 for the methods illustrated and described with reference to the examples herein, although the processor(s) can execute other types and numbers of instructions and perform other types and numbers of operations. The processor(s) 108 may comprise one or more central processing units ("CPUs") or general purpose processors with one or more processing cores, such as AMD® processor(s), although other types of processor(s) could be used (e.g., Intel®).

The memory 114 may comprise one or more tangible storage media, such as RAM, ROM, flash memory, CD-ROM, floppy disk, hard disk drive(s), solid state memory, DVD, or other memory storage types or devices, including combinations thereof, which are known to those of ordinary skill in the art. The memory 114 may store one or more non-transitory computer-readable instructions of this technology as illustrated and described with reference to the examples herein that may be executed by the one or more processor(s) 112.

The input module 116 may receive a copy of one or more encrypted messages from the communication network A 106. The input module 116 may also receive one or more message encryption key generation parameters associated with the one or more encrypted messages from the communication network A 106. The input module 116 may also receive one or more composite decryption logics from an encryption device 104, to decrypt the one or more encrypted messages.

The output module 160, may link the lawful interception device 102 with peripheral devices. The output module 118 may report the lawful interception to a law enforcement agency.

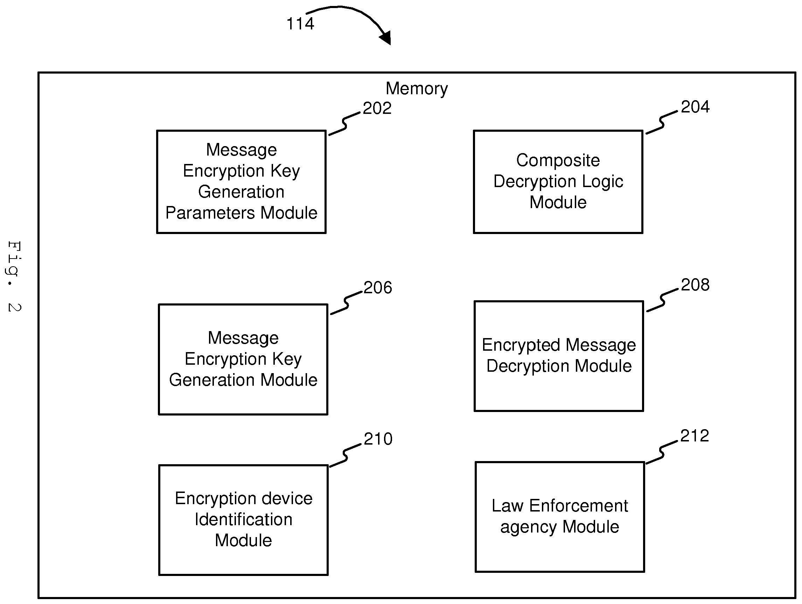

**FIG. 2** illustrates the memory 114 which may include a message encryption key generation parameters module 202, a composite decryption logic module 204, a message encryption key generation module 206, an encrypted message decryption module 208, and an encryption device identification module 210. The encrypted message decryption module 208 may receive a copy of one or more encrypted messages. Each of the one or more encrypted messages comprises an encrypted text message and an encrypted message encryption key. The encrypted text message may be an encrypted form of a text message. The text message may be encrypted using a symmetric key algorithm and a message encryption key. The encrypted message encryption key may be an encrypted form of the message encryption key. An asymmetric key encryption algorithm such as a Diffie-Hellman key exchange may be used to encrypt the message encryption key. The asymmetric key encryption algorithm may use a public key of a receiver device and a private key of a sender device. The message encryption key may be used for both encryption of the text message and decryption of the encrypted text message.

The message encryption generation module 206 may dynamically generate the message encryption key using one or more message encryption key generation parameters. The one or more message encryption key generation parameters comprises at least one of a random seed value, an International Mobile Subscriber Identity (IMSI), and one or more time stamp of executing the encryption algorithm.

The Message Encryption Key Generation Parameter Module 202 may receive the one or more message encryption key generation parameters associated with the one or more encrypted messages from the communication network A 106. The one or more message encryption key generation parameters may be used to dynamically generate the message encryption key.

The composite decryption logic module 204 may receive, from the encryption device 104, one or more composite decryption logics to decrypt the one or more encrypted messages. The one or more composite decryption logics may comprise the decryption logic for decrypting the encrypted text message, and/or the logic for generating the messaging encryption key. The encryption device 104 may also provide the message encryption key generation parameters to composite decryption logic module 204. The encryption device 104 may receive values for the message encryption key generation parameters from the communication Network A 106. The communication Network A 106 may populate the values for the one or more message encryption key generation parameters. The one or more composite decryption logics may be sent to the composite decryption logic module 204.

The encryption device identification module 210, may identify the encryption device 104, to receive the one or more composite decryption logics based on at least one of a physical distance between the communication network and the encryption device, an overload indication, a network congestion data, and route availability data. The one or more composite decryption logics may be determined by the encryption device 104 based on one or more service information and the one or more message encryption key generation parameters associated with the one or more encrypted messages received from the communication network A 106. The one or more service information may be feature data (e.g., text messaging), subscription profile data, service provider data, and/or routing information data.

The Encrypted Message Decryption Module 208 may decrypt the one or more encrypted messages based on the one or more message encryption key generation parameters and the one or more composite decryption logics for the lawful interception. The message encryption key generation module 206 generates the message encryption key using the logic for generating the messaging encryption key and the one or more message encryption key generation parameters. The Encrypted Message Decryption Module 208 may use the message encryption key to decrypt the encrypted text message. The law enforcement agency module 212 may report the lawful interception reported to a law enforcement agency.

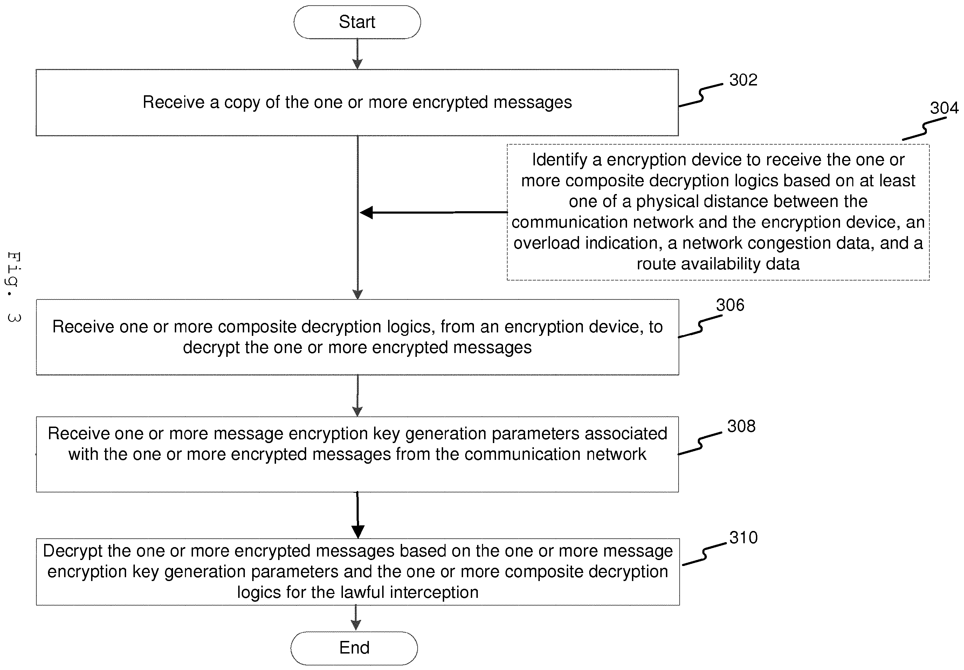

**FIG. 3** illustrates an exemplary flow diagram of a method of a lawful interception of one or more encrypted messages in a communication network, according to some embodiments of the present disclosure. The method may involve receiving, by the lawful interception device 102, a copy of the one or more encrypted messages at step 302. Each of the one or more encrypted messages comprises an encrypted text message and an encrypted message encryption key. The encrypted text message may be an encrypted form of a text message. The text message may be encrypted using a symmetric key algorithm and a message encryption key. The encrypted message encryption key may be an encrypted form of the message encryption key. An asymmetric key encryption algorithm such as a Diffie-Hellman key exchange may be used to encrypt the message encryption key. The asymmetric key encryption algorithm used to encrypt the message encryption key may use a public key of a receiver and a private key of a sender to encrypt the message encryption key. The message encryption key may be used for both encryption of the text message and decryption of the encrypted text message. The message encryption key may be generated dynamically using one or more message encryption key generation parameters. The one or more message encryption key generation parameters comprises at least one of a random seed value, an International Mobile Subscriber Identity (IMSI), and one or more time stamp of executing the encryption algorithm. The one or more encrypted messages along as well as the message encryption key generation parameters and values may be transferred to third party messaging service 108 over communication network A 106. The communication network A 106 may deliver a copy of the one or more encrypted messages to the Lawful Interception Device 102.

The method may also involve receiving, by the lawful interception device 102, one or more composite decryption logics, from the encryption device 104, to decrypt the one or more encrypted messages at step 306. The lawful interception device 102, identifies the encryption device 104 to receive the one or more composite decryption logics based on at least one of a physical distance between the communication network and the encryption device, an overload indication, a network congestion data, and route availability data at step 304. The one or more composite decryption logics may be determined by the encryption device 104 based on one or more service information and one or more message encryption key generation parameters associated with the one or more encrypted messages received from the communication network A 106. The one or more service information may be subscription profile data, service provider data, and/or routing information data. The one or more composite decryption logics may comprise the decryption logic for decrypting the encrypted text message, and/or the logic for generating the messaging encryption key. The encryption device 104 may provide the one or more message encryption key generation parameters to the communication Network A 106 to populate values for the message encryption key generation parameters. The communication Network A 106 may populate the values for the one or more message encryption key generation parameters, and send it to the lawful interception device 102. The one or more composite decryption logics may be sent to the lawful interception device 102.

At step 308, the method may involve receiving, by the lawful interception device 102, the one or more message encryption key generation parameters associated with the one or more encrypted messages from the communication network A 106. The one or more message encryption key generation parameters may be used to dynamically generate the message encryption key. The one or more message encryption key generation parameters comprise at least one of a random seed value, an International Mobile Subscriber Identity (IMSI), and one or more time stamp of executing encryption algorithm.

At step 310, the method may involve decrypting, by the lawful interception device 102, the one or more encrypted messages based on the one or more message encryption key generation parameters and the one or more composite decryption logics for the lawful interception. The lawful interception device 102 generates the message encryption key using the logic for generating the messaging encryption key and the one or more message encryption key generation parameters. The lawful interception device 102 may use the message encryption key to decrypt the encrypted text message. The lawful interception may be reported to a law enforcement agency.

### Computer System

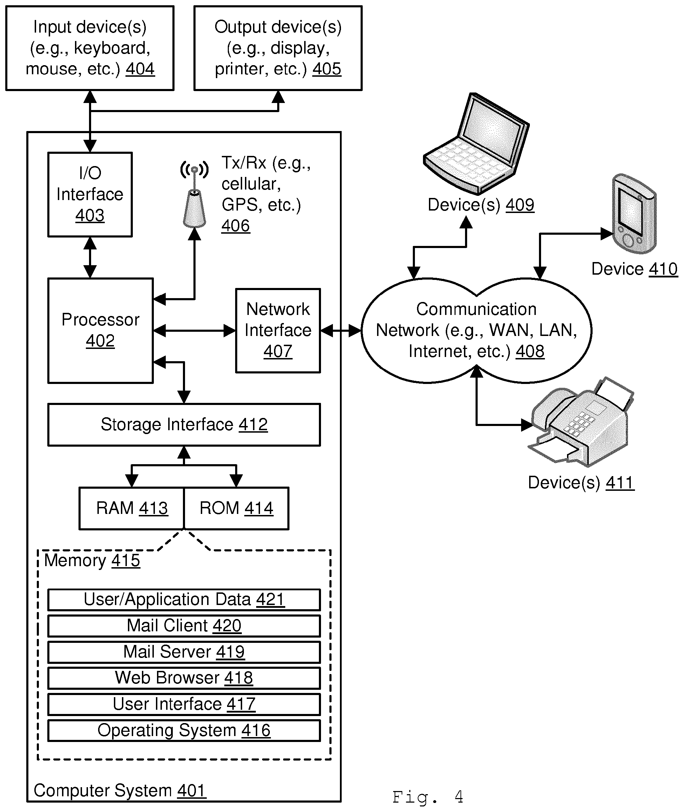

**FIG. 4** is a block diagram of an exemplary computer system for implementing embodiments consistent with the present disclosure. Variations of computer system 401 may be used for implementing lawful interception device 102, and also for encryption device 104. Computer system 401 may comprise a central processing unit ("CPU" or "processor") 402. Processor 402 may comprise at least one data processor for executing program components for executing user- or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 402 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 402 may be disposed in communication with one or more input/output (I/O) devices via I/O interface 403. The I/O interface 403 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 403, the computer system 401 may communicate with one or more I/O devices. For example, the input device 404 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 405 may be a printer, fax machine, video display (e.g., cathode ray tube (CRT), liquid crystal display (LCD), light-emitting diode (LED), plasma, or the like), audio speaker, etc. In some embodiments, a transceiver 406 may be disposed in connection with the processor 402. The transceiver may facilitate various types of wireless transmission or reception. For example, the transceiver may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 402 may be disposed in communication with a communication network 408 via a network interface 407. The network interface 407 may communicate with the communication network 408. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 408 may include, without limitation, a direct interconnection, local area network (LAN), wide area network (WAN), wireless network (e.g., using Wireless Application Protocol), the Internet, etc. Using the network interface 407 and the communication network 408, the computer system 401 may communicate with devices 410, 411, and 412. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 401 may itself embody one or more of these devices.

In some embodiments, the processor 402 may be disposed in communication with one or more memory devices (e.g., RAM 413, ROM 414, etc.) via a storage interface 412. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

The memory devices may store a collection of program or database components, including, without limitation, an operating system 416, user interface application 417, web browser 418, mail server 419, mail client 420, user/application data 421 (e.g., any data variables or data records discussed in this disclosure), etc. The operating system 416 may facilitate resource management and operation of the computer system 401. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 417 may facilitate display, execution, interaction, manipulation, or operation of program components through textual or graphical facilities. For example, user interfaces may provide computer interaction interface elements on a display system operatively connected to the computer system 401, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 401 may implement a web browser 418 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 401 may implement a mail server 419 stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 401 may implement a mail client 420 stored program component. The mail client may be a mail viewing application, such as Apple Mail, Microsoft Entourage, Microsoft Outlook, Mozilla Thunderbird, etc.

In some embodiments, computer system 401 may store user/application data 421, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

The specification has described a system and method for improved lawful interception of an encrypted message. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A method for a lawful interception of one or more encrypted messages in a communication network, the method comprising:
receiving (302), by a lawful interception device (102), a copy of the one or more encrypted messages, wherein each of the messages is encrypted by a symmetric message encryption key;
the method further comprises:
receiving, by the lawful interception device (102), one or more message encryption key generation parameters associated with the one or more encrypted messages from the communication network (106), wherein values of the message encryption key generation parameters are populated by the communication network (106);
receiving (306), by the lawful interception device, logic for generating the message encryption key, from an encryption device (104), to decrypt the one or more encrypted messages;
generating, by the lawful interception device (102), the message encryption key based on the received one or more message encryption key generation parameters and the received logic for generating the message encryption key;
decrypting (310), by the lawful interception device (102), the one or more encrypted messages based on the generated message encryption key, for the lawful interception.

2. The method of claim 1, wherein receiving the logic for generating the message encryption key further comprises identifying the encryption device (104) from which to receive the logic for generating the message encryption key based on at least one of a physical distance between the communication network and the encryption device, an overload indication, network congestion data, and route availability data.

3. The method of claim 1 or claim 2, further comprising receiving by the lawful interception device (102) one or more notifications indicating transmission of the one or more encrypted messages.

4. The method of any one of claims 1 to 3, wherein each of the one or more encrypted messages comprises an encrypted text message and an encrypted message encryption key.

5. The method of any one of claims 1 to 4, wherein the logic for generating the message encryption key is determined, by the encryption device (104), based on one or more service information and the one or more message encryption key generation parameters associated with the one or more encrypted messages received from the communication network.

6. The method of any one of claims 1 to 5, wherein the one or more message encryption key generation parameters comprise at least one of a random seed value, an International Mobile Subscriber Identity (IMSI), and one or more time stamp of executing the encryption algorithm.

7. The method of any one of claims 1 to 6, wherein the lawful interception is reported to a law enforcement agency.

8. A lawful interception device (102) comprising:
a memory (112);
a processor (114) coupled to the memory storing processor executable instructions which when executed by the processor cause the processor to perform the method of any one of claims 1 to 7.

9. A non-transitory computer readable medium (412) including instructions stored thereon that when processed by at least one processor (402) cause a lawful interception device (102) to perform the method of any one of claims 1 to 7.

## Patentansprüche

1. Verfahren für ein rechtmäßiges Abfangen von einer oder mehreren verschlüsselten Nachrichten in einem Kommunikationsnetzwerk, wobei das Verfahren Folgendes beinhaltet:
Empfangen (302), durch eine rechtmäßige Abfangvorrichtung (102), von einer Kopie der einen oder der mehreren verschlüsselten Nachrichten, wobei die Nachrichten jeweils durch einen symmetrischen Nachrichtenverschlüsselungsschlüssel verschlüsselt sind;
wobei das Verfahren ferner Folgendes beinhaltet:
Empfangen, durch die rechtmäßige Abfangvorrichtung (102), von einem oder mehreren Nachrichtenverschlüsselungsschlüssel-Erzeugungsparametern, die mit der einen oder den mehreren verschlüsselten Nachrichten von dem Kommunikationsnetzwerk (106) assoziiert sind, wobei Werte für die Nachrichtenverschlüsselungsschlüssel-Erzeugungsparameter durch das Kommunikationsnetzwerk (106) belegt werden;
Empfangen (306), durch die rechtmäßige Abfangvorrichtung, von Logik zum Erzeugen des Nachrichtenverschlüsselungsschlüssels von einer Verschlüsselungsvorrichtung (104), um die eine oder die mehreren verschlüsselten Nachrichten zu entschlüsseln;
Erzeugen, durch die rechtmäßige Abfangvorrichtung (102), des Nachrichtenverschlüsselungsschlüssels basierend auf dem einen oder den mehreren empfangenen Nachrichtenverschlüsselungsschlüssel-Erzeugungsparametern und der empfangenen Logik zum Erzeugen des Nachrichtenverschlüsselungsschlüssels;
Entschlüsseln (310), durch die rechtmäßige Abfangvorrichtung (102), der einen oder der mehreren verschlüsselten Nachrichten basierend auf dem Nachrichtenverschlüsselungsschlüssel für das rechtmäßige Abfangen.

2. Verfahren gemäß Anspruch 1, wobei das Empfangen der Logik zum Erzeugen des Nachrichtenverschlüsselungsschlüssels ferner das Identifizieren der Verschlüsselungsvorrichtung (104), von der die Logik zum Erzeugen des Nachrichtenverschlüsselungsschlüssels empfangen werden soll, basierend auf mindestens einem von einer physischen Distanz zwischen dem Kommunikationsnetzwerk und der Verschlüsselungsvorrichtung, einer Überlastanzeige, Netzwerkengpassdaten und Routenverfügbarkeitsdaten beinhaltet.

3. Verfahren gemäß Anspruch 1 oder Anspruch 2, das ferner das Empfangen durch die rechtmäßige Abfangvorrichtung (102) von einer oder mehreren Benachrichtigungen, die die Übertragung der einen oder der mehreren verschlüsselten Nachrichten anzeigen, beinhaltet.

4. Verfahren gemäß einem der Ansprüche 1 bis 3, wobei die eine oder die mehreren verschlüsselten Nachrichten jeweils eine verschlüsselte Textnachricht und einen verschlüsselten Nachrichtenverschlüsselungsschlüssel beinhalten.

5. Verfahren gemäß einem der Ansprüche 1 bis 4, wobei die Logik zum Erzeugen des Nachrichtenverschlüsselungsschlüssels durch die Verschlüsselungsvorrichtung (104) basierend auf einer oder mehreren Dienstinformationen und dem einen oder den mehreren Nachrichtenverschlüsselungsschlüssel-Erzeugungsparametern, die mit der einen oder den mehreren von dem Kommunikationsnetzwerk empfangenen verschlüsselten Nachrichten assoziiert sind, bestimmt wird.

6. Verfahren gemäß einem der Ansprüche 1 bis 5, wobei der eine oder die mehreren Nachrichtenverschlüsselungsschlüssel-Erzeugungsparameter mindestens eines von einem Zufallsausgangswert, einer internationalen Mobilfunk-Teilnehmerkennung (International Mobile Subscriber Identity, IMSI) und einem oder mehreren Zeitstempeln des Ausführens des Verschlüsselungsalgorithmus beinhalten.

7. Verfahren gemäß einem der Ansprüche 1 bis 6, wobei das rechtmäßige Abfangen einer Strafverfolgungsbehörde gemeldet wird.

8. Rechtmäßige Abfangvorrichtung (102), die Folgendes beinhaltet:
einen Speicher (112);
einen Prozessor (114), der mit dem Speicher gekoppelt ist, der prozessorausführbare Anweisungen speichert, die, wenn sie durch den Prozessor ausgeführt werden, den Prozessor veranlassen, das Verfahren gemäß einem der Ansprüche 1 bis 7 durchzuführen.

9. Nicht transitorisches computerlesbares Medium (412), das darauf gespeicherte Anweisungen umfasst, die, wenn sie durch mindestens einen Prozessor (402) ausgeführt werden, eine rechtmäßige Abfangvorrichtung (102) veranlassen, das Verfahren gemäß einem der Ansprüche 1 bis 7 durchzuführen.

## Revendications

1. Procédé permettant une interception légale d'un ou plusieurs messages chiffrés dans un réseau de communication, le procédé comprenant :
la réception (302), par un dispositif d'interception légal (102), d'une copie du ou des messages chiffrés, chacun des messages étant chiffré par une clé de chiffrement de message symétrique ;
le procédé comprend en outre :
la réception, par le dispositif d'interception légal (102), d'un ou de plusieurs paramètres de génération de clé de chiffrement de message associés au ou aux messages chiffrés provenant du réseau de communication (106), lesdites valeurs des paramètres de génération de clé de chiffrement de message étant renseignées par le réseau de communication (106) ;
la réception (306), par le dispositif d'interception légal, d'une logique destinée à la génération de la clé de chiffrement de message, en provenance d'un dispositif de chiffrement (104), afin de déchiffrer le ou les messages chiffrés ;
la génération, par le dispositif d'interception légal (102), de la clé de chiffrement de message sur la base du ou des paramètres de génération de clé de chiffrement de message reçus et de la logique reçue en vue de la génération de la clé de chiffrement de message ;
le déchiffrement (310), par le dispositif d'interception légal (102), du ou des messages chiffrés sur la base de la clé de chiffrement de message générée, en vue de l'interception légale.

2. Procédé selon la revendication 1, ladite réception de la logique destinée à la génération de la clé de chiffrement de message comprenant en outre l'identification du dispositif de chiffrement (104) en provenance duquel est reçu la logique destinée à la génération de la clé de chiffrement de message sur la base d'au moins l'une d'une distance physique entre le réseau de communication et le dispositif de chiffrement, d'une indication de surcharge, de données de congestion du réseau et de données de disponibilité de route.

3. Procédé selon la revendication 1 ou 2, comprenant en outre la réception par le dispositif d'interception légal (102) d'une ou de plusieurs notifications indiquant l'émission du ou des messages chiffrés.

4. Procédé selon l'une quelconque des revendications 1 à 3, chacun du ou des messages chiffrés comprenant un message textuel chiffré et une clé de chiffrement de message chiffré.

5. Procédé selon l'une quelconque des revendications 1 à 4, ladite logique destinée à la génération de la clé de chiffrement de message étant déterminée par le dispositif de chiffrement (104), sur la base d'une ou de plusieurs informations de service et du ou des paramètres de génération de clé de chiffrement de message associés au ou aux messages chiffrés reçus en provenance du réseau de communication.

6. Procédé selon l'une quelconque des revendications 1 à 5, ledit ou lesdits paramètres de génération de clé de chiffrement de message comprenant au moins l'une d'une valeur initiale aléatoire, d'une identité internationale d'abonné mobile (IMSI) et d'un ou de plusieurs horodatages d'exécution de l'algorithme de chiffrement.

7. Procédé selon l'une quelconque des revendications 1 à 6, ladite interception légale étant rapportée à un organisme chargé de l'application de la loi.

8. Dispositif d'interception légal (102) comprenant :
une mémoire (112) ;
un processeur (114) couplé à la mémoire stockant des instructions exécutables par le processeur qui, lorsqu'elles sont exécutées par le processeur, amènent le processeur à effectuer le procédé selon l'une quelconque des revendications 1 à 7.

9. Support lisible par ordinateur non transitoire (412) comprenant des instructions stockées sur celui-ci qui, lorsqu'elles sont traitées par au moins un processeur (402), amènent un dispositif d'interception légale (102) à effectuer le procédé selon l'une quelconque des revendications 1 à 7.
